# EUROPÄISCHE PATENTSCHRIFT

(11) **EP 4 270 346 B1**
(45) Veröffentlichungstag und Bekanntmachung des Hinweises auf die Patenterteilung: **12.02.2025**
(21) Anmeldenummer: 22169662.8
(22) Anmeldetag: 25.04.2022
(51) Int. Cl.: G08B 21/02, G08B 29/18, G08B 31/00, G08G 1/00

(54) **ÜBERWACHEN EINES NUTZFAHRZEUGS**
MONITORING OF A COMMERCIAL VEHICLE
SURVEILLANCE D'UN VÉHICULE UTILITAIRE

(43) Veröffentlichungstag der Anmeldung: 01.11.2023
(73) Patentinhaber: Schmitz Cargobull AG, 48341 Altenberge (DE)
(72) Erfinder: Küsters, John, 48691 Vreden (DE)
(74) Vertreter: Cohausz & Florack

(56) Entgegenhaltungen:
- WO-A2-2014/128472
- US-B1- 9 603 158

## Beschreibung

### Gebiet der Erfindung

Beispielhafte Ausführungsformen der Erfindung betreffen ein Verfahren, eine Servervorrichtung, ein System und ein Computerprogramm zum Überwachen eines Nutzfahrzeugs.

### Hintergrund der Erfindung

Häufig kommen bei Diebstählen von Transportgütern aus einem Nutzfahrzeug Störsender zum Einsatz, die eine Funkkommunikation des Nutzfahrzeugs verhindern sollen, so dass das Nutzfahrzeug oder der Fahrer des. Nutzfahrzeugs beispielsweise keine Notrufstelle oder den zuständigen Disponenten benachrichtigen kann. Der Einsatz eines solchen Störsenders kann somit verhindern, dass Hilfe gerufen wird und geht somit mit einer hohen Gefährdung für das Nutzfahrzeug, den Fahrer des Nutzfahrzeugs und die durch das Nutzfahrzeug transportierten Transportgüter einher. Um auf den Einsatz eines solchen Störsenders in der Nähe des Nutzfahrzeugs aufmerksam zu machen, kann das Nutzfahrzeug beispielsweise in regelmäßigen Abständen eine Überwachungsinformation an einen Server senden, so dass der Server eine Alarm auslösen kann (z.B. indem ein Disponenten oder eine Notrufstelle benachrichtigt wird), wenn eine solche Überwachungsinformation überfällig ist. Ein Nachteil ist jedoch, dass bei einer solchen Vorgehensweise Fehlalarme ausgelöst werden können, wenn sich das Nutzfahrzeug in einem Funkloch befindet. Aus der US 9 603 158 B1 ist ein Verfahren zur Kontrolle einer Flotte von selbstfahrenden Fahrzeugen bekannt, bei der auf dem Server eine Streckenkarte der Sendestärke des Mobilfunknetzwerks gepflegt wird. Dabei geht es insbesondere um die Sendelatenz, Funklöcher werden darin nicht gespeichert.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch den Gegenstand der unabhängigen Ansprüche. Vorteilhafte beispielhafte Ausgestaltungen der Erfindung sind den abhängigen Ansprüchen zu entnehmen.

Es wird ein Verfahren ausgeführt durch einen Server offenbart, wobei das Verfahren umfasst:
- Bereithalten einer Vielzahl von historischen Funksignalinformationen, die von einer Vielzahl von Nutzfahrzeugen stammen, wobei jede der historischen Funksignalinformationen von einem jeweiligen der Nutzfahrzeuge an einer jeweiligen Nutzfahrzeugposition erfasst wurde, und wobei jede der historischen Funksignalinformationen die jeweilige Nutzfahrzeugposition und eine durch das jeweilige Nutzfahrzeug an der jeweiligen Nutzfahrzeugposition erfasste jeweilige Funksignalqualität eines Funkkommunikationssystems repräsentiert;
- Überwachen eines Nutzfahrzeugs, das sich entlang einer vorgegebenen Route bewegt, durch:
   - Empfangen von von dem überwachten Nutzfahrzeug über das Funkkommunikationssystem gesendeten Überwachungsinformationen, wobei jede der Überwachungsinformationen eine jeweilige aktuelle Nutzfahrzeugposition repräsentiert;
   - Bestimmen, ob eine Überwachungsinformation von dem überwachten Nutzfahrzeug überfällig ist;
   - falls bestimmt wird, dass eine Überwachungsinformation von dem überwachten Nutzfahrzeug überfällig ist, Bestimmen, zumindest teilweise basierend auf den historischen Funksignalinformationen, ob die Überfälligkeit der Überwachungsinformation von dem überwachten Nutzfahrzeug ein zu erwartendes Ereignis ist.

Das Verfahren ist beispielsweise ein Verfahren zum Überwachen des Nutzfahrzeugs, d.h. des Nutzfahrzeugs, das sich entlang der vorgegebenen Route bewegt.

Dass das Verfahren durch einen Server ausgeführt wird, soll beispielsweise derart verstanden werden, dass der Server alle Schritte des Verfahrens ausführt. Dabei soll unter dem Server (1) eine Servervorrichtung (z.B. die unten offenbarte Servervorrichtung) oder (2) eine Servercloud umfassend mehrere Servervorrichtungen, die miteinander kooperieren, um die Schritte des Verfahrens auszuführen, oder (3) ein virtueller Server verstanden werden. Dabei soll unter einer Servervorrichtung eine physische Vorrichtung mit Hardware-Komponenten verstanden werden.

Ferner wird eine Servervorrichtung offenbart, wobei die Servervorrichtung Mittel eingerichtet zur Ausführung des offenbarten Verfahrens umfasst. Die Servervorrichtung ist beispielsweise eine Vorrichtung zum Überwachen des Nutzfahrzeugs, d.h. des Nutzfahrzeugs, das sich entlang der vorgegebenen Route bewegt.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Servervorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Servervorrichtung zu veranlassen, das offenbarte Verfahren auszuführen.

Alternativ oder zusätzlich können die Mittel ferner eine oder mehrere Kommunikationsschnittstellen (z.B. einen oder mehrere drahtgebundene und/oder drahtlose Kommunikationsschnittstellen, z.B. eine drahtlose Kommunikationsschnittstellen in Form einer Funkschnittstelle) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Servervorrichtung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor einen Server (z.B. die offenbarte Servervorrichtung) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Ferner wird ein System offenbart, wobei das System umfasst:
- die offenbarte Servervorrichtung; und
- ein durch die Servervorrichtung zu überwachendes Nutzfahrzeug.

Im Folgenden werden die Eigenschaften des offenbarten Verfahrens (im Folgenden auch als "Verfahren" bezeichnet), der offenbarten Servervorrichtung (im Folgenden auch als "Servervorrichtung" bezeichnet), des offenbarten Computerprogramms (im Folgenden auch als "Computerprogramm" bezeichnet) sowie des offenbarten Systems (im Folgenden auch als "System" bezeichnet) - teilweise beispielhaft - beschrieben. Es versteht sich, dass das Verfahren, die Servervorrichtung, das Computerprogramm und das System zueinander korrespondieren, so dass die Offenbarung eines Merkmals für eine dieser Kategorien als Offenbarung eines korrespondierenden Merkmals für die anderen Kategorien verstanden werden soll.

Unter einem Nutzfahrzeug soll zum Beispiel ein Lastkraftwagen, ein Sattelzugfahrzeug oder ein Anhänger, insbesondere ein Sattelauflieger, verstanden werden. Solche Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Die Vielzahl von Nutzfahrzeugen können eine Nutzfahrzeugflotte oder Teil einer Nutzfahrzeugflotte sein, zum Beispiel einer Nutzfahrzeugflotte eines Nutzfahrzeugherstellers oder eines Telematikdienstes. Zum Beispiel gehören zu einer Nutzfahrzeugflotte eines Nutzfahrzeugherstellers nur von dem Nutzfahrzeughersteller hergestellte Nutzfahrzeuge, und zu einer zu einer Nutzfahrzeugflotte eines Telematikdienstes gehören nur von dem Telematikdienst überwachte Nutzfahrzeuge. Die Nutzfahrzeuge einer solchen Nutzfahrzeugflotten verhalten sich ähnlich und/oder weisen ähnliche technische Eigenschaften auf, so dass durch solche Nutzfahrzeugflotten gesammelte Informationen wie beispielsweise historische Funksignalinformationen gut miteinander verglichen und gemeinsam verarbeitet werden können. Auch erlauben durch solche Nutzfahrzeuge einer solchen Nutzfahrzeugflotten gesammelte Informationen aufgrund des ähnlichen Verhaltens und/oder der ähnlichen technischen Eigenschaften mit höherer Genauigkeit Rückschlüsse für andere Nutzfahrzeuge der Nutzfahrzeugflotte zu ziehen als für andere Nutzfahrzeuge. Dies gilt insbesondere für baugleiche Nutzfahrzeuge des gleichen Nutzfahrzeugherstellers.

Beispielsweise ist jedes der Nutzfahrzeuge der Vielzahl von Nutzfahrzeugen eingerichtet, jeweilige Funksignalinformationen zu erzeugen während sich das jeweilige Nutzfahrzeug entlang einer Route bewegt. Zu diesem Zweck kann das jeweilige Nutzfahrzeug beispielsweise eingerichtet sein, an verschiedenen Positionen auf der Route seine jeweilige Nutzfahrzeugposition und die jeweilige Funksignalqualität des Funkkommunikationssystems an der jeweiligen Nutzfahrzeugposition zu erfassen und eine jeweilige Funksignalinformation, die die erfasste Nutzfahrzeugposition und die erfasste Funksignalqualität des Funkkommunikationssystems repräsentiert, zu erzeugen. Zum Beispiel kann die jeweilige Nutzfahrzeugposition und die jeweilige Funksignalqualität des Funkkommunikationssystems durch das jeweilige Nutzfahrzeug an vorgegebenen Positionen und/oder zu vorgegebenen Zeitpunkten und/oder in vorgegebenen zeitlichen Abständen (z.B. vergangene Zeit seit dem letzten Erfassen) und/oder in vorgegebenen räumlichen Abständen (z.B. zurückgelegte Distanz seit dem letzten Erfassen) erfasst werden. Die vorgegebenen zeitlichen und/oder räumlichen Abstände sind beispielsweise regelmäßige Zeit- oder Distanzintervalle, so dass durch die Vorgabe die Auflösung der Funksignalinformationen vorgegeben wird. Es versteht sich, dass die vorgegebenen zeitlichen und/oder räumlichen Abstände für verschiedene Abschnitte auf der Route auch unterschiedlich sein können. Die vorgegebenen Positionen und/oder Zeitpunkte können beispielsweise so gewählt sein, dass sie im Zusammenhang mit besonderen Zeitpunkten oder Positionen auf der Route liegen. Die durch das jeweilige Nutzfahrzeug erzeugten Funksignalinformationen können durch das jeweilige Nutzfahrzeug beispielsweise unmittelbar nach dem Erzeugen oder gesammelt (z.B. nach Abschluss der Route) an den Server gesendet werden.

Diese in der Vergangenheit von dem Server von der Vielzahl von Nutzfahrzeugen empfangenen Funksignalinformationen werden hier auch als historische Funksignalinformationen bezeichnet.

Unter dem Empfangen von Informationen (z.B. von historischen Funksignalinformationen und/oder Überwachungsinformationen) soll beispielsweise verstanden werden, dass die Informationen über ein Kommunikationsnetzwerk (z.B. ein lokales Netzwerk (Engl: Local Area Network, LAN), ein Weitverkehrsnetzwerk (Engl: Wide Area Network) und/oder das Internet) empfangen werden. Ein lokales Netzwerk ist beispielsweise ein Ethernet, das in den Standards der IEEE-802.3-Familie spezifiziert ist, die derzeit im Internet unter https://standards.ieee.org/ abrufbar sind. Das Funkkommunikationssystem kann beispielsweise Teil dieses Kommunikationsnetzwerks und/oder damit verbunden sein.

Bei der durch eine jeweilige der historischen Funksignalinformationen repräsentierten jeweiligen Funksignalqualität des Funkkommunikationssystems kann es sich beispielsweise um einen durch eine Funkkommunikationsschnittstelle des jeweiligen Nutzfahrzeugs erfassten Funksignalparameter handeln, der für eine Empfangsqualität eines Funksignals des Funkkommunikationssystems an der jeweiligen Nutzfahrzeugposition charakteristisch ist. Beispiele für einen solchen Funksignalparameter sind eine Empfangsfeldstärke (Engl: Received Signal Strength) oder ein Empfangsfeldstärkeindikator (Engl: Received Signal Strength Indicator, RSSI) oder ein Signalrauschabstand (Engl: Signal-to-Noise Ratio, SNR) oder eine Referenzsignalempfangsqualität (Engl: Reference Signal Received Quality, RSRQ). Ein solcher Funksignalparameter ermöglicht Rückschlüsse darauf, ob an der jeweiligen Nutzfahrzeugposition eine Kommunikation über das Funkkommunikationssystem zum Erfassungszeitpunkt möglich war. Zum Beispiel kann ein Funksignalqualitätsschwellwert (z.B. -95 dBm für die Empfangsfeldstärke oder 0 dB für den Signalrauschabstand oder -20 dB für die Referenzsignalempfangsqualität) vorgegeben werden, bei dessen Unterschreiten davon ausgegangen wird, dass keine Kommunikation mehr möglich ist (d.h., dass sich dort ein Funkloch befindet). Das Funkkommunikationssystem ist beispielsweise ein Mobilfunkkommunikationssystem wie ein 2G, 3G, 4G oder 5G-Mobilfunkkommunikationssystem. Die Spezifikationen der 2G, 3G, 4G oder 5G Mobilfunkkommunikationssysteme werden derzeit durch das 3rd Generation Partnership Project (3GPP) entwickelt und können derzeit im Internet unter https://www.3gpp.org/ abgerufen werden.

Es versteht sich, dass es sich bei der durch eine jeweilige der historischen Funksignalinformationen repräsentierte jeweilige Nutzfahrzeugposition nicht exakt um die Nutzfahrzeugposition handeln muss, an der die durch die jeweilige der historischen Funksignalinformationen repräsentierte Funksignalqualität des Funkkommunikationssystems erfasst wurde. Unterschiede können sich beispielsweise aufgrund von Messungenauigkeiten oder unterschiedlichen Messlaufzeiten (z.B. zwischen dem Erfassen der Nutzfahrzeugposition und der Funksignalqualität des Funkkommunikationssystems) ergeben.

Bei der durch eine jeweilige der historischen Funksignalinformationen repräsentierte jeweilige Nutzfahrzeugposition kann es sich beispielsweise um eine durch einen Positionssensor des jeweiligen Nutzfahrzeugs erfasste Nutzfahrzeugposition handeln. Ein Beispiel für einen solchen Positionssensor ist ein Positionssensor eines Globalen Navigationssatellitensystems (Engl: Global Navigation Satellite System, GNSS) wie beispielsweise Navstar GPS, Galileo, Glonass oder Beidou.

Die historischen Funksignalinformationen wurden durch den Server beispielsweise bereitgehalten, indem sie durch den Server gespeichert werden. Dabei kann das Speichern der historischen Funksignalinformationen in unverarbeiteter Form oder in weiterverarbeiteter Form (z.B. in normierter Form und/oder in komprimierter Form und/oder in Form einer Funksignalqualitätskarte) erfolgen.

Jede der durch den Server bereitgehaltenen historischen Funksignalinformationen repräsentiert die jeweilige Funksignalqualität des Funkkommunikationssystems, die durch das jeweilige Nutzfahrzeug an der jeweiligen Nutzfahrzeugposition erfasst wurde und erlaubt somit Rückschlüsse darauf, ob an der jeweiligen Nutzfahrzeugposition eine Kommunikation über das Funkkommunikationssystem zum Erfassungszeitpunkt möglich war. In den durch den Server bereitgehaltenen historischen Funksignalinformationen abgedeckten geographischen Bereichen, lassen die historischen Funksignalinformationen somit Rückschlüsse auf die Versorgung durch das Funkkommunikationssystem (d.h. die Möglichkeit über das Funkkommunikationssystem zu kommunizieren) zu. Um eine möglichst genaue und/oder große geographische Abdeckung zu erreichen, ist es beispielsweise vorteilhaft, wenn möglichst viele historische Funksignalinformationen bereitgehalten werden, zum Beispiel indem möglichst viele Nutzfahrzeuge (z.B. alle Nutzfahrzeuge einer möglichst großen Nutzfahrzeugflotte) Funksignalinformationen sammeln und an den Server senden.

Die historischen Funksignalinformationen macht sich die vorliegende Erfindung beim Überwachen eines Nutzfahrzeugs, das sich entlang einer vorgegebenen Route bewegt, zunutze. Dies ist insbesondere vorteilhaft, wenn die vorgegebene Route ganz oder teilweise in dem durch die Vielzahl von historischen Funksignalinformationen abgedeckten geographischen Bereich verläuft. Zum Beispiel kann ein Teil der historischen Funksignalinformationen von einem Nutzfahrzeug der Vielzahl von Nutzfahrzeugen erfasst worden sein, das sich in der Vergangenheit entlang dieser vorgegebenen Route oder einem Routenabschnitt der vorgegebenen Route bewegt hat.

Das überwachte Nutzfahrzeug kann beispielsweise Teil der Vielzahl von Nutzfahrzeugen sein, so dass ein Teil der Vielzahl von historischen Funksignalinformationen von dem überwachten Nutzfahrzeug und/oder, wenn die Vielzahl eine Fahrzeugflotte oder Teil einer Fahrzeugflotte sind, von Nutzfahrzeugen, die sich ähnlich verhalten und/oder ähnliche technische Eigenschaften aufweisen, stammen, so dass die historischen Funksignalinformationen mit hoher Genauigkeit Rückschlüsse für das überwachte Nutzfahrzeug zu lassen. Zum Beispiel kann das überwachte Nutzfahrzeug oder ein baugleiches Nutzfahrzeug des gleichen Herstellers sich bereits in der Vergangenheit entlang der vorgegebenen Route oder einem Routenabschnitt der vorgegebenen Route bewegt und währenddessen Funksignalinformationen gesammelt haben.

Das überwachte Nutzfahrzeug kann beispielsweise eingerichtet sein, an verschiedenen Positionen auf der vorgegebenen Route seine jeweilige Nutzfahrzeugposition (z.B. durch einen Positionssensor wie einen Positionssensor eines Globalen Navigationssatellitensystems) zu erfassen und eine jeweilige Überwachungsinformation, die die erfasste Nutzfahrzeugposition repräsentiert, zu erzeugen. Es versteht sich, dass jede der Überwachungsinformationen neben der jeweiligen erfassten Nutzfahrzeugposition optional auch eine durch das überwachte Nutzfahrzeug an der jeweiligen Nutzfahrzeugposition erfasste jeweilige Funksignalqualität des Funkkommunikationssystems repräsentieren kann, so dass jede Überwachungsinformation auch eine Funksignalinformation ist und anschließend vom Server als historische Funksignalinformation bereitgehalten werden kann.

Zum Beispiel kann die jeweilige Nutzfahrzeugposition (und optional die jeweilige Funksignalqualität) durch das überwachte Nutzfahrzeug an vorgegebenen Positionen und/oder zu vorgegebenen Zeitpunkten und/oder in vorgegebenen zeitlichen Abständen (z.B. vergangene Zeit seit dem letzten Erfassen) und/oder in vorgegebenen räumlichen Abständen (z.B. zurückgelegte Distanz seit dem letzten Erfassen) erfasst werden. Die vorgegebenen zeitlichen und/oder räumlichen Abstände sind beispielsweise regelmäßige Zeit- oder Distanzintervalle, so dass sie eine Überwachung des Fortschritts des Nutzfahrzeugs beim Bewegen entlang der vorgegebenen Route ermöglichen. Es versteht sich, dass die vorgegebenen zeitlichen und/oder räumlichen Abstände für verschiedene Abschnitte auf der Route auch unterschiedlich sein können. Die vorgegebenen Positionen und/oder Zeitpunkte können beispielsweise so gewählt sein, dass sie im Zusammenhang mit besonderen Zeitpunkten oder Positionen auf der Route liegen. Die durch das jeweilige Nutzfahrzeug erzeugten Überwachungsinformationen können durch das jeweilige Nutzfahrzeug beispielsweise unmittelbar nach dem Erzeugen über das Funkkommunikationssystem an den Server gesendet werden, so dass sie eine zeitnahe Überwachung des Nutzfahrzeugs ermöglichen: Dementsprechend können die Überwachungsinformationen durch den Server zeitlich nacheinander (z.B. in den vorgegebenen zeitlichen Abständen) empfangen werden.

Das Bestimmen, ob eine Überwachungsinformation von dem überwachten Nutzfahrzeug überfällig ist, kann beispielsweise anhand von vorgegebenen Regeln (z.B. einem vorgegebenen Algorithmus) erfolgen. Die Regeln orientieren sich beispielsweise an den Vorgaben zum Erfassen der Nutzfahrzeugposition und dem anschließenden Erzeugen und Senden der Überwachungsinformation durch das überwachte Nutzfahrzeug. Zum Beispiel können die Regeln vorgeben, dass eine Überwachungsinformation überfällig ist, wenn in einem vorgegebenen zeitlichen Abstand seit dem Empfang der letzten Überwachungsinformation oder zu einem vorgegebenen Zeitpunkt keine neue Überwachungsinformation von dem überwachten Nutzfahrzeug empfangen wurde. Alternativ oder zusätzlich können die Regeln beispielsweise vorgeben, dass eine Überwachungsinformation überfällig ist, wenn bestimmt wird, dass das überwachte Nutzfahrzeug einen vorgegebenen räumlichen Abstand (d.h. eine vorgegebene Distanz) seit dem Empfang der letzten Überwachungsinformation zurückgelegt hat oder einer vorgegebene Nutzfahrzeugposition auf der vorgegebenen Route passiert hat, ohne dass eine neue Überwachungsinformation empfangen wurde. Dabei kann die zurückgelegte Distanz oder die aktuelle Nutzfahrzeugposition auf der vorgegebenen Route anhand einer angenommen Geschwindigkeit des überwachten Nutzfahrzeugs und der verstrichenen Zeit seit dem Empfang der letzten Überwachungsinformation bestimmt werden. Die angenommene Geschwindigkeit des überwachten Nutzfahrzeugs kann beispielsweise vorgegeben sein oder zumindest teilweise basierend auf den zuvor empfangenen Überwachungsinformationen (z.B. als bisherige Durchschnittsgeschwindigkeit des überwachten Nutzfahrzeugs auf der vorgegebenen Route oder einem Routenabschnitt der vorgegebenen Route) bestimmt werden. Ferner kann die angenommen Geschwindigkeit zumindest teilweise auch basierend auf historischen Funksignalinformationen (z.B. basierend auf historischen Funksignalinformationen, die von Nutzfahrzeugen stammen, die sich zuvor entlang der vorgegebenen Route bewegt haben) bestimmt werden. Dementsprechend kann unter einer überfälligen Überwachungsinformation insbesondere eine zeitlich überfällige Überwachungsinformation sein, d.h. eine Überwachungsinformation, die nach den vorgegebenen Regeln bereits hätte empfangen worden sein müssen.

Das offenbarte Verfahren kann beispielsweise umfassen, das bestimmt wird, dass eine Überwachungsinformation von dem überwachten Nutzfahrzeug überfällig ist, so dass anschließend bestimmt wird, ob die Überfälligkeit der Überwachungsinformation von dem überwachten Nutzfahrzeug ein zu erwartendes Ereignis ist.

Das Bestimmen, zumindest teilweise basierend auf den historischen Funksignalinformationen, ob die Überfälligkeit der Überwachungsinformation von dem überwachten Nutzfahrzeug ein zu erwartendes Ereignis ist kann beispielsweise anhand von vorgegebenen Regeln (z.B. einem vorgegebenen Algorithmus) erfolgen. Die Regeln können beispielsweise vorgeben, dass die Überfälligkeit der Überwachungsinformation von dem überwachten Nutzfahrzeug ein zu erwartendes Ereignis ist, wenn die bereitgehaltenen historische Funksignalinformationen den Rückschluss darauf zu lassen, dass an der aktuellen Nutzfahrzeugposition des überwachten Nutzfahrzeugs eine Kommunikation über das Funkkommunikationssystem nicht möglich ist (d.h., dass sich das Nutzfahrzeug in einem Funkloch befinden könnte).

Die Erfindung ermöglicht es somit basierend auf den historischen Funksignalinformationen zu erkennen, ob sich das überwachte Nutzfahrzeug an einer Nutzfahrzeugposition befinden könnte, an der eine Kommunikation über das Funkkommunikationssystem nicht möglich sein könnte. Dadurch können beispielsweise Fehlalarme vermieden werden, wenn sich das Nutzfahrzeug in einem Funkloch befindet.

In beispielhaften Ausführungsformen des offenbarten Verfahrens umfasst das Verfahren ferner:
- falls bestimmt wird, dass das die Überfälligkeit der Überwachungsinformation von dem überwachten Nutzfahrzeug ein zu erwartendes Ereignis ist, Unterdrücken einer Alarmaktion; und/oder
- falls nicht bestimmt wird, dass das die Überfälligkeit der Überwachungsinformation von dem überwachten Nutzfahrzeug ein zu erwartendes Ereignis ist, Auslösen und/oder Ausführen einer Alarmaktion.

Unter dem Unterdrücken der Alarmaktion soll beispielsweise verstanden werden, dass die Alarmaktion nur dann ausgelöst wird, wenn die überfällige Überwachungsinformation in einem vorgegebenen zukünftigen Zeitraum (z.B. in den nächsten 2 oder 5 oder 10 Minuten) nicht empfangen wird.

Beispiele für eine solche Alarmaktion sind das Benachrichtigen eines Disponenten oder einer Notrufstelle. Das Benachrichtigen kann beispielsweise umfassen, dass dem Disponenten oder der Notrufstelle Informationen über die Überfälligkeit der Überwachungsinformation und/oder das überwachte Nutzfahrzeug (z.B. die letzte Überwachungsinformation, d.h. die zuletzt von dem überwachten Nutzfahrzeug empfangene Überwachungsinformation) bereitgestellt werden.

In beispielhaften Ausführungsformen des offenbarten Verfahrens umfasst das Bestimmen, ob die zeitliche Überfälligkeit ein zu erwartendes Ereignis ist:
- Bestimmen einer aktuellen Nutzfahrzeugposition des überwachten Nutzfahrzeugs auf der vorgegebenen Route; und
- Bestimmen einer zu erwartenden Funksignalqualität des Funkkommunikationssystems an der bestimmten aktuellen Nutzfahrzeugposition des überwachten Nutzfahrzeugs.

Es versteht sich, dass die bestimmte aktuelle Nutzfahrzeugposition des überwachten Nutzfahrzeugs von der tatsächlichen aktuellen Nutzfahrzeugposition des überwachten Nutzfahrzeugs abweichen kann und dass die zu erwartende Funksignalqualität von der tatsächlichen Funksignalqualität an der jeweiligen Nutzfahrzeugposition abweichen kann.

Zum Beispiel wird für das Bestimmen der aktuellen Nutzfahrzeugposition des überwachten Nutzfahrzeugs auf der vorgegebenen Route zumindest eine zuvor von dem überwachten Nutzfahrzeug empfangene Überwachungsinformation berücksichtigt wird. Zum Beispiel kann die aktuelle Nutzfahrzeugposition ausgehend von der durch die letzte Überwachungsinformation repräsentierte Nutzfahrzeugposition bestimmt werden, indem eine seit dem Empfangen der letzten Überwachungsinformation durch das Nutzfahrzeug auf der vorgegebenen Route zurückgelegte Distanz bestimmt wird. Wie oben offenbart, kann die zurückgelegte Distanz auf der vorgegebenen Route anhand einer angenommen Geschwindigkeit des überwachten Nutzfahrzeugs und der verstrichenen Zeit seit dem Empfangen der letzten Überwachungsinformation bestimmt werden. Die angenommene Geschwindigkeit des überwachten Nutzfahrzeugs kann beispielsweise vorgegeben sein.(z.B. als auf aktuellen Verkehrs- und/oder Geschwindigkeitsdaten erwartete Durchschnittsgeschwindigkeit und/oder erlaubte Höchstgeschwindigkeit auf dem Routenabschnitt seit dem Empfangen der letzten Überwachungsinformation) oder zumindest teilweise basierend auf den historischen Funksignalinformationen (z.B. historische Funksignalinformationen, die von Nutzfahrzeugen stammen, die sich zuvor entlang der vorgegebenen Route bewegt haben) und/oder zuvor empfangenen Überwachungsinformationen (z.B. als bisherige Durchschnittsgeschwindigkeit auf der vorgegebenen Route oder einem Routenabschnitt der vorgegebenen Route) bestimmt werden. Dies ist beispielsweise vorteilhaft, um die aktuelle Nutzfahrzeugposition möglichst genau bestimmen zu können.

Zum Beispiel wird für das Bestimmen der zu erwartenden Funksignalqualität ein Teil der Vielzahl von historischen Funksignalinformationen berücksichtigt. Der Teil der Vielzahl von historischen Funksignalinformationen kann (z.B. nur) historische Funksignalinformationen der historischen Funksignalinformationen umfassen, die eine jeweilige Nutzfahrzeugposition repräsentieren, die in einem vorgegebenen Bereich um und/oder vorgegebenen Abstand von der bestimmten aktuellen Nutzfahrzeugposition des überwachten Nutzfahrzeugs ist. Dies hat den Effekt, dass neben den unmittelbar an der bestimmten aktuellen Nutzfahrzeugposition erfassten Funksignalinformationen weitere Funksignalinformationen berücksichtigt werden können, so dass der Einfluss möglicher Ausreißer (z.B. aufgrund fehlerhafter Messungen oder Informationsübertragungen) oder veralteter Funksignalinformationen verringert wird. Alternativ oder zusätzlich kann der Teil der Vielzahl von historischen Funksignalinformationen (z.B. nur) historischen Funksignalinformationen der historischen Funksignalinformationen umfassen, die nicht älter als ein vorgegebener Altersschwellwert (z.B. eine Stunde oder einen Tag oder einen Monat oder sechs Monate oder 12 Monate) sind. Hierdurch wird der Einfluss möglicherweise veralteter historischer Funksignalinformationen verringert werden. Es versteht sich, dass der vorgegebene Bereich und/oder der vorgegebene Abstand und/oder der vorgegebene Altersschwellwert auch derart gewählt werden können, dass der Teil der Vielzahl von historischen Funksignalinformationen eine Mindestmenge von historischen Funksignalinformationen (z.B. eine oder drei oder fünf oder 10 historische Funksignalinformationen) umfasst.

Die zu erwartende Funksignalqualität wird beispielsweise als Mittelwert der durch den Teil der Vielzahl von historischen Funksignalinformationen als Funksignalqualitäten repräsentierten Funksignalparameter (z.B. der durch die historische Funksignalinformationen dieses Teils der Vielzahl von historischen Funksignalinformationen repräsentierten Empfangsfeldstärken oder Empfangsfeldstärkeindikatoren oder Signalrauschabständen) bestimmt. Zum Beispiel kann die zu erwartenden Funksignalqualität als gewichteter Mittelwert der durch den Teil der Vielzahl von historischen Funksignalinformationen als Funksignalqualitäten repräsentierten Funksignalparameter bestimmt werden, wobei zum Beispiel der Abstand der durch die jeweilige historische Funksignalinformationen zu der bestimmten aktuellen Nutzfahrzeugposition und/oder die verstrichene Zeit seit dem Erfassen und/oder Erzeugen und/oder Empfangen der jeweiligen Funksignalinformation als Gewichtsfaktoren berücksichtigt werden können. Die Verwendung eines gewichteten Mittelwerts ist beispielsweise vorteilhaft, um das Alter der historischen Funksignalinformationen und/oder deren Entfernung berücksichtigen zu können. So sind ältere oder weiter entfernte historische Funksignalinformationen mit einer höheren Wahrscheinlichkeit nicht (mehr) charakteristisch für die tatsächliche Funksignalqualität an der jeweiligen Nutzfahrzeugposition als jüngere oder weniger weit entfernte historischen Funksignalinformationen.

Wenn die historischen Funksignalinformationen in Form einer Funksignalqualitätskarte bereitgehalten werden, kann das Bestimmen der zu erwartenden Funksignalqualität durch das Bestimmen der durch die Funksignalqualitätskarte für die bestimmte aktuelle Nutzfahrzeugposition repräsentierten Funksignalqualität erfolgen.

Es kann beispielsweise vorgesehen sein, dass bestimmt wird, dass die Überfälligkeit der Überwachungsinformation von dem überwachten Nutzfahrzeug ein zu erwartendes Ereignis ist, wenn die zu erwartenden Funksignalqualität des Funkkommunikationssystems an der bestimmten aktuellen Nutzfahrzeugposition des überwachten Nutzfahrzeugs unter einem vorgegebenen Funksignalqualitätsschwellwert ist. Beispiele für einen solchen Funksignalqualitätsschwellwert sind -95 dBm für die Empfangsfeldstärke als Funksignalparameter oder 0 dB für den Signalrauschabstand oder -20 dB für die Referenzsignalempfangsqualität als Funksignalparameter.

In beispielhaften Ausführungsformen des offenbarten Verfahrens erfolgt das Bestimmen, ob die zeitliche Überfälligkeit ein zu erwartendes Ereignis ist, auf einem Algorithmus zum maschinellen Lernen und/oder einem künstlichen neuronalen Netzwerk, wobei der Algorithmus zum maschinellen Lernen und/oder das künstliche neuronale Netzwerk zuvor mit der Vielzahl von historischen Funksignalinformationen trainiert wurde..

In beispielhaften Ausführungsformen des offenbarten Verfahrens umfasst das Verfahren ferner:
- Bestimmen der für das überwachte Nutzfahrzeug vorgegebenen Route zumindest teilweise basierend auf den historischen Funksignalinformationen.

Zum Beispiel wird die für das überwachte Nutzfahrzeug vorgegebenen Route derart bestimmt wird, dass Routenabschnitte mit einer zu erwartenden Funksignalqualität unter einem vorgegebener Funksignalqualitätsschwellwert vermieden und/oder minimiert werden. Wie oben offenbart, sind Beispiele für einen solchen Funksignalqualitätsschwellwert -95 dBm für die Empfangsfeldstärke als Funksignalparameter oder 0 dB für den Signalrauschabstand oder -20 dB für die Referenzsignalempfangsqualität als Funksignalparameter. Für jeden Routenabschnitt der vorgegebenen Route oder für die gesamte vorgegebene Route kann beispielsweise geprüft werden, ob die zu erwartende Funksignalqualität größer oder gleich dem vorgegebenen Funksignalqualitätsschwellwert ist. Alternativ oder zusätzlich kann die Überprüfung der Routenabschnitte der vorgegebenen Route oder der gesamten vorgegebenen Route beispielsweise auf Gütekriterien wie die aus der Regelungstechnik bekannte L¹ und L² Norm verwendet werden, wobei e(t) dann die Funkqualität und nicht Regelabweichung repräsentieren würde. Das Bestimmen der für das überwachte Nutzfahrzeug vorgegebenen Route kann beispielsweise gemäß einem Routenplanungsalgorithmus erfolgen.

In beispielhaften Ausführungsformen der vorliegenden Offenbarung sind die historischen Funksignalinformationen und die Überwachungsinformationen Telematikinformationen, wobei jeder der Telematikinformationen von einer jeweiligen Telematikeinheit des jeweiligen Nutzfahrzeugs erzeugt wird. Zum Beispiel repräsentiert jede der Telematikinformationen zumindest eine oder mehrere der folgenden Angaben:
- eine aktuelle Nutzfahrzeugposition;
- eine Funksignalqualität eines Funkkomunikationssystems;
- eine aktuelle Nutzfahrzeuggeschwindigkeit,

In beispielhaften Ausführungsformen der vorliegenden Offenbarung werden die empfangenen oder bereitgehaltenen historischen Funksignalinformationen durch eine Funksignalqualitätskarte repräsentiert. Beispiele für eine solche Funksignalqualitätskarte ist eine Gitterkarte, bei der jeder Gitterknotenpunkt und/oder jede Gitterfläche eine jeweilige zu erwartende Funksignalqualität repräsentiert. Wenn die Funksignalqualitätskarte eine Gitterkarte ist, kann das Bestimmen der für den zu der bestimmten aktuellen Nutzfahrzeugposition nächstliegenden Gitterknotenpunkt repräsentierte Funksignalqualität oder die für die Gitterfläche der bestimmten aktuellen Nutzfahrzeugposition repräsentierte Funksignalqualität erfolgen.

Dementsprechend kann das offenbarte Verfahren ferner umfassen:
- Bestimmen der Funksignalqualitätskarte zumindest teilweise basierend auf den historischen Funksignalinformationen.

Es versteht sich, dass das Bestimmen der Funksignalqualitätskarte auf einem Algorithmus basieren kann, der die historischen Funksignalinformationen als Eingangsparameter erhält. Der Algorithmus kann beispielsweise ein Algorithmus (i) zum maschinellen Lernen (z.B. ein auf einem auf maschinellen Lernen basierenden Regressionsverfahren) und/oder (ii) zur Interpolation von durch historische Funksignalinformationen als Funksignalqualitäten repräsentierte Funksignalparameter und/oder zur Bildung von Mittelwerten von durch historische Funksignalinformationen als Funksignalqualitäten repräsentierte Funksignalparametern.

Wenn die Funksignalqualitätskarte eine Gitterkarte ist, kann beispielsweise für jeden Gitterknotenpunkt und/oder jede Gitterfläche eine jeweilige zu erwartende Funksignalqualität bestimmt werden, so dass die Funksignalqualitätskarte für den jeweiligen Gitterknotenpunkt und/oder jede Gitterfläche die jeweilige erwartende Funksignalqualität repräsentiert.

Zum Beispiel werden für das Bestimmen der zu erwartenden Funksignalqualität für einen jeweiligen Gitterknotenpunkt alle historischen Funksignalinformationen der historischen Funksignalinformationen berücksichtigt, die eine jeweilige Nutzfahrzeugposition repräsentieren, die in einem vorgegebenen Bereich um und/oder vorgegebenen Abstand von der durch den Gitterknotenpunkt repräsentierten geographischen Position ist; und/oder für das Bestimmen der zu erwartenden Funksignalqualität für eine jeweiligen Gitterfläche werden zum Beispiel alle historischen Funksignalinformationen der historischen Funksignalinformationen berücksichtigt, die eine jeweilige Nutzfahrzeugposition repräsentieren, die in der durch die Gitterfläche repräsentierten geographischen Bereich ist. Die für den jeweiligen Gitterknotenpunkt und/oder die jeweilige Gitterfläche bestimmte zu erwartende Funksignalqualität ist beispielsweise ein Mittelwert der durch diese historische Funksignalinformationen als Funksignalqualitäten repräsentierte Funksignalparameter (z.B. der durch diese historische Funksignalinformationen repräsentierten Empfangsfeldstärken oder Empfangsfeldstärkeindikatoren oder Signalrauschabständen oder Referenzsignalempfangsqualitäten).

Es versteht sich, dass wenn neue historische Funksignalinformationen empfangen werden, die Funksignalqualitätskarte erneut zumindest teilweise basierend auf den neuen historischen Funksignalinformationen bestimmt wird. Zum Beispiel wird die Funksignalqualitätskarte nur basierend auf historischen Funksignalinformationen bestimmt, die nicht älter als ein vorgegebener Altersschwellwert (z.B. ein Monat oder sechs Monate oder 12 Monate) sind. Dies hat den Effekt, dass die Funksignalqualitätskarte stets aktuell bleibt und sich an eine veränderte Funkumgebung anpasst.

Ferner kann vorgesehen sein, dass die Funksignalqualitätskarte dem überwachten Nutzfahrzeug bereitgestellt wird. Zum Beispiel kann die Funksignalqualitätskarte von dem Server gesendet und durch die Telematikeinheit des überwachten Nutzfahrzeugs empfangen werden.

Dies ist beispielsweise vorteilhaft, um das überwachte Nutzfahrzeug in die Lage zu versetzen zu bestimmen, ob die Funksignalqualität an der jeweils aktuellen Position des überwachten Nutzfahrzeugs der erwarteten Funksignalqualität, wie sie durch die Funksignalqualitätskarte repräsentiert wird, entspricht. Dabei kann die Funksignalqualität an der jeweils aktuellen Position des überwachten Nutzfahrzeugs ein durch eine Funkkommunikationsschnittstelle des überwachten Nutzfahrzeugs an der jeweils aktuellen Position erfasster Funksignalparameter, der für eine Empfangsqualität eines Funksignals des Funkkommunikationssystems an der jeweiligen Nutzfahrzeugposition charakteristisch ist, sein. Dieser durch eine Funkkommunikationsschnittstelle des überwachten Nutzfahrzeugs an der jeweils aktuellen Position erfasster Funksignalparameter kann beispielsweise mit einem durch die Funksignalqualitätskarte für die aktuelle Position des überwachten Nutzfahrzeugs als erwartete Funksignalqualität repräsentierten Funksignalparameter verglichen werden. Beispiele für solche Funksignalparameter sind, wie oben offenbart, eine Empfangsfeldstärke (Engl: Received Signal Strength) oder ein Empfangsfeldstärkeindikator (Engl: Received Signal Strength Indicator, RSSI) oder ein Signalrauschabstand (Engl: Signal-to-Noise Ratio, SNR) oder eine Referenzsignalempfangsqualität (Engl: Reference Signal Received Quality, RSRQ).

Beispielsweise kann vorgesehen sein, dass, falls die Abweichung zwischen der Funksignalqualität an der jeweils aktuellen Position des überwachten Nutzfahrzeugs und der durch die Funksignalqualitätskarte repräsentierten erwarteten Funksignalqualität an dieser Position einen vorgegebenen Schwellwert überschreitet, dass eine Alarmaktion ausgelöst wird. Beispiele für eine solche Alarmaktion sind beispielsweise ein optischer Alarm (z.B. Aktivieren der Warnlichtanlage) oder ein akustischer Alarm (z.B. Aktivieren eines Huptons) oder eine Benachrichtigung des Fahrers (z.B. über ein Fahrerinformationsdisplay) oder eine Kombination dieser Alarmaktionen.

In beispielhaften Ausführungsformen der vorliegenden Offenbarung ist das überwachte Nutzfahrzeug ein Lastkraftwagen, ein Sattelzugfahrzeug oder ein Anhänger, insbesondere ein Sattelauflieger.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Systems gemäß der Erfindung ;
- Fig. 2: eine schematische Darstellung einer Ausführungsform einer Servervorrichtung gemäß der Erfindung; und
- Fig. 3: ein Flussdiagramm einer Ausführungsform eines Verfahrens gemäß der Erfindung.

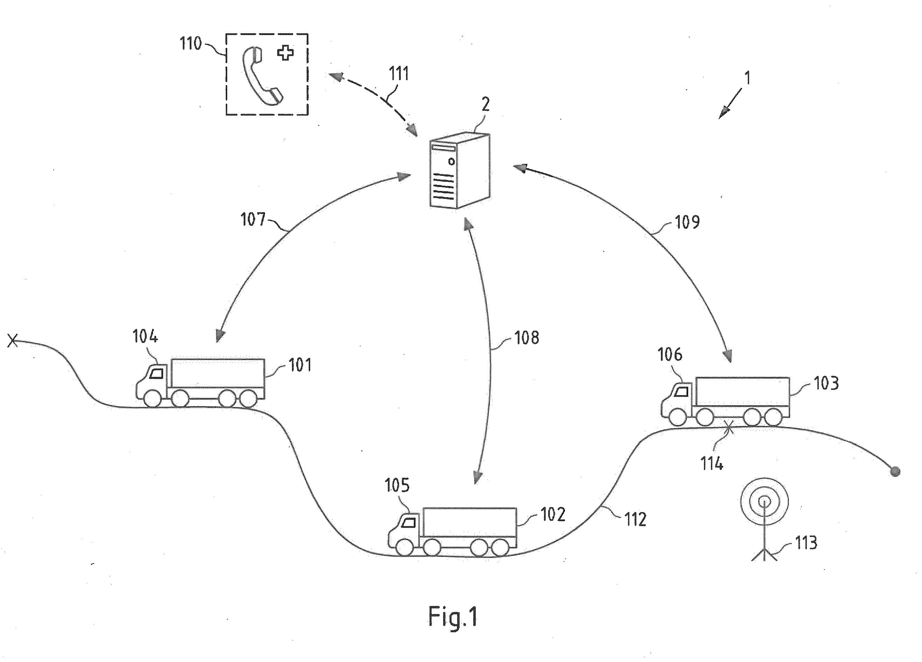

Fig. 1 ist eine schematische Darstellung einer beispielhaften Ausführungsform eines Systems 1 gemäß der Erfindung.

Das System 1 umfasst unter anderem eine Vielzahl von Nutzfahrzeugen 101 bis 106. Die Nutzfahrzeuge 101 bis 103 sind in Fig. 1 beispielhaft als Sattelauflieger dargestellt, die von einem der jeweiligen Zugfahrzeuge 104 bis 106 gezogen werden. Ferner umfasst das System 1 eine von den Sattelaufliegern 101 bis 103 und den Zugfahrzeugen 101 bis 103 entfernte Servervorrichtung 2.

In Fig. 1 sind jeweilige Kommunikationspfade 107 bis 109 zwischen den Sattelaufliegern 101 bis 103 und der Servervorrichtung 2 dargestellt. Über den Kommunikationspfad 107 können der Sattelaufliegers 101 und die Servervorrichtung 2 Informationen (z.B. Funkstörsignalinformationen und/oder Überwachungsinformationen) austauschen (z.B. senden und empfangen). In gleicher Weise können die Sattelauflieger 102 und 103 und die Servervorrichtung 2 über den jeweiligen der Kommunikationspfade 108 und 109 Informationen (z.B. Funkstörsignalinformationen und/oder Überwachungsinformationen) austauschen (z.B. senden und empfangen). Zum Beispiel kann jeder der Sattelauflieger 101 bis 103 eine jeweilige Telematikeinheit umfassen, die eingerichtet ist, um mit der Servervorrichtung 2 über den jeweiligen Kommunikationspfad Informationen auszutauschen.

Im Folgenden wird beispielhaft davon ausgegangen, dass jeder der Kommunikationspfade 107 bis 109 eine jeweilige Verbindung über ein Mobilfunkkommunikationssystem wie ein 2G/3G/4G/5G-Kommunikationssystem umfasst. Wie oben offenbart, werden die Spezifikationen der 2G, 3G, 4G oder 5G Mobilfunkkommunikationssysteme derzeit durch das 3rd Generation Partnership Project (3GPP) entwickelt und können derzeit im Internet unter https://www.3gpp.org/ abgerufen werden.

Es versteht sich, dass jeder der Kommunikationspfade 107 bis 109 neben der drahtlosen Verbindung über das Mobilfunkkommunikationssystem auch eine drahtgebundene Verbindung über ein drahtgebundenes Kommunikationsnetzwerk wie ein lokales Netzwerk (Engl: Local Area Network, LAN), ein Weitverkehrsnetzwerk (Engl: Wide Area Network) und/oder das Internet umfassen kann. Zum Beispiel wird im Folgenden davon ausgegangen, dass die Servervorrichtung 2 Informationen über die jeweilige Verbindung über das drahtgebundene Kommunikationsnetzwerk des jeweiligen Kommunikationspfads der Kommunikationspfade 107 bis 109 drahtgebunden senden und/oder empfangen kann. Ein lokales Netzwerk ist beispielsweise ein Ethernet, das in den Standards der IEEE-802.3-Familie spezifiziert ist, die derzeit im Internet unter https://standards.ieee.org/ abrufbar sind. Der Informationsaustausch über die Kommunikationspfade 107 bis 109 kann verschlüsselt erfolgen.

Zusätzlich ist in Fig. 1 ein Disponent und/oder eine Notrufstelle mit dem Bezugszeichen 110 optional dargestellt. Die Servervorrichtung 2 kann mit Disponent/Notrufstelle 110 beispielsweise über den Kommunikationspfad 111 kommunizieren. Disponent/Notrufstelle 110 sollen nicht als Bestandteil des Systems 1 verstanden werden.

Die Nutzfahrzeugen 101 bis 106 bewegen sich zeitlich versetzt entlang der vorgegebenen Route 112, so dass die Nutzfahrzeuge 101 und 104 sowie 102 und 105 die aktuelle Nutzfahrzeugposition der Nutzfahrzeuge 103 und 106 bereits in der Vergangenheit passiert haben.

An der aktuellen Nutzfahrzeugposition der Nutzfahrzeuge 103 und 106 auf der vorgegebenen Route 112 ist ferner ein Störsender 113 dargestellt. Dieser Störsender ist ebenfalls kein Teil des Systems 1. Als die Nutzfahrzeuge 101 und 104 sowie 102 und 105 diese Nutzfahrzeugposition passiert haben, befand sich der Störsender 113 zum Beispiel noch nicht dort. Der Störsender 113 verhindert beispielsweise, dass der Sattelauflieger 103 an der aktuellen Nutzfahrzeugposition über das Mobilfunkkommunikationssystems, d.h. über den Kommunikationspfad 109 mit der Servervorrichtung 2, Informationen austauschen kann. Zum Beispiel ist der Störsender 113 eingerichtet zum Aussenden eines Funkstörsignals, um den Empfang eines Mobilfunksignals des Mobilfunkkommunikationssystems zu verhindern. Zu diesem Zweck wird das Funkstörsignal beispielsweise durch den Störsender 113 mit der gleichen Frequenz wie das Trägersignal des Mobilfunksignals oder mit einer Frequenz in dem gleichen Frequenzband wie das Trägersignal des Mobilfunksignals ausgesendet, so dass das Funkstörsignal das Mobilfunksignal innerhalb eines Abdeckungsbereichs des Störsenders 113 derart überlagert, dass der Empfang des Mobilfunksignals verhindert wird. Zum Beispiel führt diese Überlagerung zu einer derartigen Verringerung des Signal-Rausch-Abstands innerhalb des Abdeckungsbereichs des Störsenders 113, dass der Empfang des Mobilfunksignals nicht möglich ist. Der Abdeckungsbereich des Störsenders 113 schließt die aktuelle Nutzfahrzeugposition der Nutzfahrzeuge 103 und 106 ein. Im Folgenden wird daher davon ausgegangen, dass der Sattelauflieger 103 an der aktuellen Nutzfahrzeugposition kein Mobilfunksignal empfangen und somit nicht über den Kommunikationspfad 109 Informationen mit der Servervorrichtung 2 austauschen können.

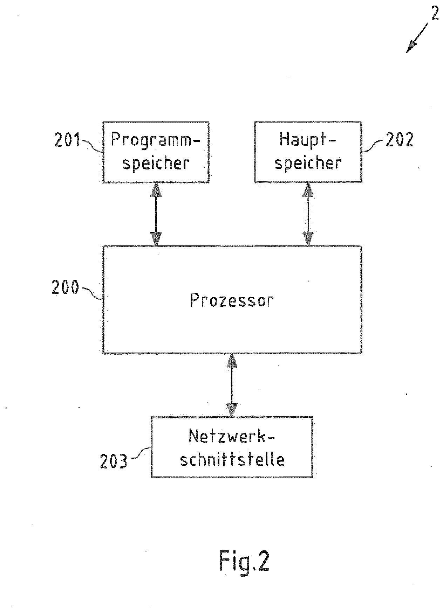

Fig. 2 zeigt eine schematische Darstellung einer Ausführungsform einer Servervorrichtung 2 gemäß der Erfindung. Im Folgenden wird beispielhaft davon ausgegangen, dass die Servervorrichtung 2 des in Fig. 1 dargestellten Systems 1 dieser in Fig. 2 dargestellten Servervorrichtung 2 entspricht.

Die Servervorrichtung umfasst einen Prozessor 200 und verbunden mit dem Prozessor 200 einen ersten Speicher als Programmspeicher 201, einen zweiten Speicher als Hauptspeicher 202 und eine Netzwerkschnittstelle 203.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Servervorrichtung 2 auch mehrere Prozessoren 200 umfassen kann.

Prozessor 200 führt Programmanweisungen aus, die in Programmspeicher 201 gespeichert sind, und speichert beispielsweise Zwischenergebnisse oder Ähnliches in Hauptspeicher 202. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

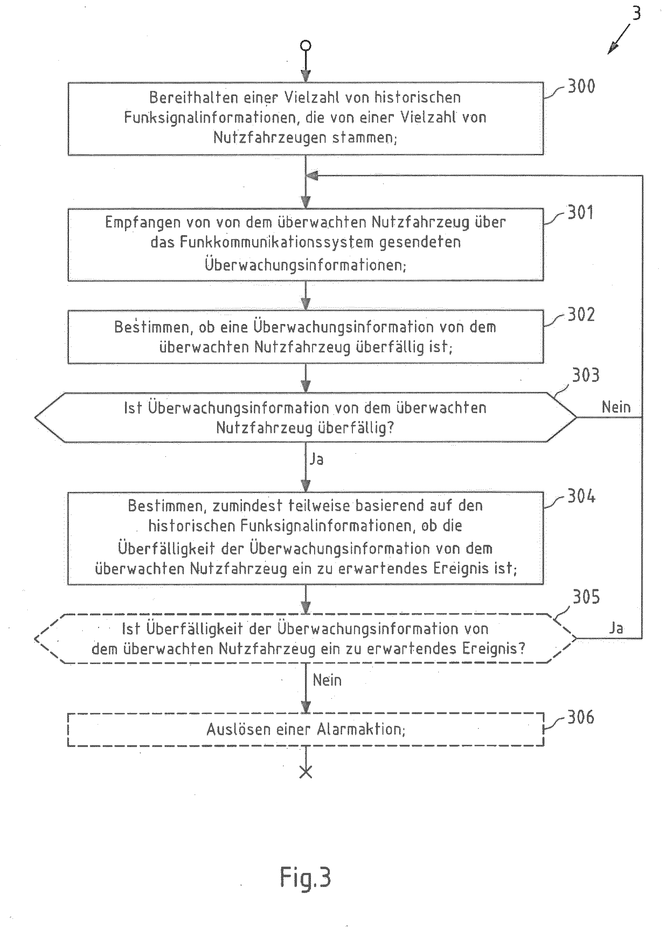

In Programmspeicher 201 sind beispielsweise Programmanweisungen gespeichert, die den Prozessor 200, wenn er die Programmanweisungen ausführt, veranlassen, das Verfahren gemäß dem zweiten Aspekt der Erfindung (z.B. das Verfahren gemäß dem in Fig. 3 dargestellten Flussdiagramm 3) zumindest teilweise auszuführen und/oder zu steuern.

Programmspeicher 201 enthält ferner beispielsweise das Betriebssystem der Servervorrichtung 2, das beim Starten der Servervorrichtung 2 zumindest teilweise in Hauptspeicher 202 geladen und vom Prozessor 200 ausgeführt wird. Insbesondere wird beim Starten der Funkkommunikationsvorrichtung 2 zumindest ein Teil des Kerns des Betriebssystems in den Hauptspeicher 202 geladen und von Prozessor 200 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Servervorrichtung 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 202 und Programmspeicher 201 können auch als ein Speicher ausgebildet sein. Alternativ können Hauptspeicher 202 und/oder Programmspeicher 201 jeweils durch mehrere Speicher gebildet werden. Ferner können Hauptspeicher 202 und/oder Programmspeicher 201 auch Teil des Prozessors 200 sein.

Prozessor 200 steuert die Netzwerkschnittstelle 203, welche beispielsweise eingerichtet ist über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Netzwerkschnittstelle 203 eine drahtgebundene Netzwerkschnittstelle ist. Ein Beispiel für eine drahtgebundene Netzwerkschnittstelle ist eine Ethernet-Schnittstelle. Zum Beispiel kann die Servervorrichtung 2 die Netzwerkschnittstelle 203 verwenden, um Informationen (z.B. Funksignalinformationen und/oder Überwachungsinformationen) über die Kommunikationspfade 107 bis 109 mit den Sattelaufliegern 101 bis 103 des in Fig. 1 dargestellten Systems 1 auszutauschen (z.B. zu senden und/oder zu empfangen).

Die Komponenten 200 bis 203 der Servervorrichtung 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Servervorrichtung 2 neben den Komponenten 200 bis 203 weitere Komponenten (z.B. eine Benutzerschnittstelle) umfassen kann.

Fig. 3 zeigt ein Flussdiagramm 3 einer Ausführungsform eines Verfahrens gemäß der Erfindung. Im Folgenden wird beispielhaft angenommen, dass die Schritte 300 bis 303 durch die Servervorrichtung 2 des in Fig. 1 dargestellten Systems 1 ausgeführt werden.

In einem Schritt 300 wird eine Vielzahl von historischen Funksignalinformationen, die von der Vielzahl von Nutzfahrzeugen 101 bis 103 stammen, bereitgehalten. Jede der historischen Funksignalinformationen wurde von einem jeweiligen der Nutzfahrzeuge 101 bis 103 an einer jeweiligen Nutzfahrzeugposition erfasst, und jede der historischen Funksignalinformationen repräsentiert die jeweilige Nutzfahrzeugposition und eine durch das jeweilige der Nutzfahrzeuge 101 bis 103 an der jeweiligen Nutzfahrzeugposition erfasste jeweilige Funksignalqualität des Mobilfunkkommunikationssystems, über das die Kommunikationspfade 107 bis 109 zumindest teilweise verlaufen.

Beispielsweise ist jedes der Nutzfahrzeuge 101 bis 103 eingerichtet, jeweilige Funksignalinformationen zu erzeugen während sich das jeweilige Nutzfahrzeug entlang einer Route wie der Route 112 bewegt. Zu diesem Zweck kann das jeweilige Nutzfahrzeug beispielsweise eingerichtet sein, an verschiedenen Positionen auf der Route seine jeweilige Nutzfahrzeugposition und die jeweilige Funksignalqualität des Mobilfunkkommunikationssystems an der jeweiligen Nutzfahrzeugposition zu erfassen und eine jeweilige Funksignalinformation, die die erfasste Nutzfahrzeugposition und die erfasste Funksignalqualität des Funkkommunikationssystems repräsentiert, zu erzeugen. Bei der durch eine jeweilige Funksignalinformation repräsentierten jeweiligen Funksignalqualität des Mobilfunkkommunikationssystems kann es sich beispielsweise um einen durch eine Funkkommunikationsschnittstelle des jeweiligen Nutzfahrzeugs erfassten Funksignalparameter handeln, der für eine Empfangsqualität eines Mobilfunksignals des Mobilfunkkommunikationssystems an der jeweiligen Nutzfahrzeugposition charakteristisch ist. Beispiele für einen solchen Funksignalparameter sind, wie oben offenbart, eine Empfangsfeldstärke (Engl: Received Signal Strength) oder ein Empfangsfeldstärkeindikator (Engl: Received Signal Strength Indicator, RSSI) oder ein Signalrauschabstand (Engl: Signal-to-Noise Ratio, SNR). Im Folgenden wird beispielhaft davon ausgegangen, dass die jeweilige Nutzfahrzeugposition und die jeweilige Funksignalqualität des Mobilfunkkommunikationssystems durch jedes der Nutzfahrzeuge 101 bis 103 in vorgegebenen zeitlichen Abständen (z.B. vergangene Zeit seit dem letzten Erfassen) erfasst und entsprechende Funksignalinformationen erzeugt und unmittelbar nach dem Erzeugen über den jeweiligen der Kommunikationspfade 107 bis 109 an die Servervorrichtung 2 gesendet werden.

Diese in der Vergangenheit durch die Servervorrichtung 2 von den Nutzfahrzeugen 101 bis 103 empfangenen Funksignalinformationen werden hier auch als historische Funksignalinformationen bezeichnet und durch die Servervorrichtung 2 als historische Funksignalinformationen bereitgehalten, indem sie im Programmspeicher 201 der Servervorrichtung 2 gespeichert werden.

Jede der durch die Servervorrichtung 2 bereitgehaltenen historischen Funksignalinformationen repräsentiert die jeweilige Funksignalqualität des Mobilfunkkommunikationssystems, die durch das jeweilige Nutzfahrzeug an der jeweiligen Nutzfahrzeugposition erfasst wurde und erlaubt somit Rückschlüsse darauf, ob an der jeweiligen Nutzfahrzeugposition eine Kommunikation über das Mobilfunkkommunikationssystem zum Erfassungszeitpunkt möglich war. Zum Beispiel bewegen sich die Nutzfahrzeuge 101 und 104 sowie 102 und 105 zeitlich vor den Nutzfahrzeugen 103 und 106 entlang der Route 112, so dass die Servervorrichtung 2 durch die Nutzfahrzeuge 101 und 102 auf der Route 112 erfasste Funksignalinformationen als historische Funksignalinformationen bereithält, die an Nutzfahrzeugpositionen erfasst wurden, die die Nutzfahrzeuge 103 und 106 noch nicht passiert haben. Jede dieser historischen Funksignalinformationen erlaubt Rückschlüsse darauf, ob zu dem Zeitpunkt, an dem das jeweilige der Nutzfahrzeuge 101 und 102 die jeweilige Nutzfahrzeugposition auf der Route 112 passiert hat, an der jeweiligen Nutzfahrzeugposition eine Kommunikation über das Mobilfunkkommunikationssystem möglich. Diese historischen Funksignalinformationen macht sich die vorliegende Erfindung beim Überwachen des Nutzfahrzeugs 103, das sich entlang der vorgegebenen Route 112 bewegt, zunutze.

Das Überwachen des Nutzfahrzeugs 103, das sich entlang der vorgegebenen Route 112 bewegt, umfasst die im Folgenden offenbarten Schritte 301 bis 304 und optional die Schritte 305 und 306:
Im Schritt 301 werden von dem überwachten Nutzfahrzeug 103 über den Kommunikationspfad 109, der zumindest teilweise über das Mobilfunkkommunikationssystem verläuft, gesendete Überwachungsinformationen empfangen, wobei jede der Überwachungsinformationen eine jeweilige aktuelle Nutzfahrzeugposition des überwachten Nutzfahrzeugs 103 repräsentiert.

Wie oben offenbart, ist das Nutzfahrzeug 103 eingerichtet, in vorgegebenen zeitlichen Abständen (z.B. in einem vorgegebenen zeitlichen Abstand von 30 Sekunden oder 60 Sekunden oder 120 Sekunden oder 300 Sekunden) seine jeweilige Nutzfahrzeugposition auf der Route 112 und die jeweilige Funksignalqualität des Mobilfunkkommunikationssystems an der jeweiligen Nutzfahrzeugposition zu erfassen und eine jeweilige Funksignalinformation, die die erfasste Nutzfahrzeugposition und die erfasste Funksignalqualität des Funkkommunikationssystems repräsentiert, zu erzeugen und unmittelbar nach dem Erzeugen über den Kommunikationspfade 109 an die Servervorrichtung 2 zu senden, so dass sie zumindest im Wesentlichen in den vorgegebenen zeitlichen Abständen durch die Servervorrichtung empfangen werden. Im Folgenden wird davon ausgegangen, dass diese zumindest im Wesentlichen in den vorgegebenen zeitlichen Abständen von dem überwachten Nutzfahrzeug 103 über den Kommunikationspfad 109 empfangenen Funksignalinformationen den in Schritt 301 empfangenen Überwachungsinformationen entsprechen.

In Schritt 302 wird bestimmt, ob eine Überwachungsinformation von dem überwachten Nutzfahrzeug 103 überfällig ist. Das Bestimmen in Schritt 302 kann beispielsweise gemäß vorgegebenen Regeln erfolgen. Zum Beispiel können die Regeln vorgeben, dass, wenn die seit dem Empfangen der letzten Überwachungsinformationen vergangene Zeit, den vorgegebenen zeitlichen Abstand überschreitet (z.B. um mehr als 5% oder mehr als 10% überschreitet), ohne dass eine neue Überwachungsinformation von dem überwachten Nutzfahrzeug 103 empfangen wurde, bestimmt wird, dass eine Überwachungsinformation von dem überwachten Nutzfahrzeug 103 überfällig ist.

Falls bestimmt wird, dass eine Überwachungsinformation von dem überwachten Nutzfahrzeug 103 überfällig ist, wird das Flussdiagramm mit Schritt 304 fortgesetzt. Andernfalls springt das Flussdiagramm in Schritt 303 zurück zu Schritt 301.

Im Folgenden wird beispielhaft davon ausgegangen, dass das überwachte Nutzfahrzeug 103 an der aktuellen Nutzfahrzeugposition 114 seine Nutzfahrzeugposition und die Funksignalqualität des Mobilfunkkommunikationssystems an der Nutzfahrzeugposition 114 erfasst hat. Allerdings konnte das überwachte Nutzfahrzeug 103 die Überwachungsinformation (d.h. die entsprechende Funksignalinformation) aufgrund des Störsenders 113 nicht über den Kommunikationspfad 109 an die Servervorrichtung 2 senden, so dass die Überwachungsinformation überfällig ist. Dementsprechend wird in Schritt 302 bestimmt, dass eine Überwachungsinformation von dem überwachten Nutzfahrzeug 103 überfällig ist und das Flussdiagramm wird mit Schritt 304 fortgesetzt.

In Schritt 304 wird zumindest teilweise basierend auf den historischen Funksignalinformationen bestimmt, ob die Überfälligkeit der Überwachungsinformation von dem überwachten Nutzfahrzeug 103 ein zu erwartendes Ereignis ist. Das Bestimmen,

Zum Beispiel umfasst das Bestimmen in Schritt 304:
- Bestimmen einer aktuellen Nutzfahrzeugposition des überwachten Nutzfahrzeugs 103 auf der vorgegebenen Route 113; und
- Bestimmen einer zu erwartenden Funksignalqualität des Funkkommunikationssystems an der bestimmten aktuellen Nutzfahrzeugposition des überwachten Nutzfahrzeugs 113.

Zum Beispiel kann die aktuelle Nutzfahrzeugposition ausgehend von der durch die letzte Überwachungsinformation repräsentierte Nutzfahrzeugposition bestimmt werden, indem eine seit dem Empfangen der letzten Überwachungsinformation durch das Nutzfahrzeug auf der vorgegebenen Route 112 zurückgelegte Distanz bestimmt wird. Die zurückgelegte Distanz auf der vorgegebenen Route 112 kann anhand einer angenommen Geschwindigkeit des überwachten Nutzfahrzeugs 113 und der verstrichenen Zeit seit dem Empfangen der letzten Überwachungsinformation bestimmt werden. Die angenommene Geschwindigkeit des überwachten Nutzfahrzeugs kann beispielsweise vorgegeben sein, z.B. als erwartete Durchschnittsgeschwindigkeit auf dem Routenabschnitt seit dem Empfangen der letzten Überwachungsinformation. Die erwartete Durchschnittsgeschwindigkeit kann zumindest teilweise basierend auf den bereitgehaltenen historischen Funksignalinformationen bestimmt werden. Zum Beispiel können für jedes der Nutzfahrzeuge 101 und 102, die die Nutzfahrzeugposition 114 auf der Route 112 bereits passiert haben, jeweils zumindest zwei historische Funksignalinformationen, die von dem jeweiligen Nutzfahrzeug empfangen wurden. Die jeweils zumindest zwei historischen Funksignalinformationen umfassen eine historische Funksignalinformation, die eine Nutzfahrzeugposition repräsentiert, die auf der Route 112 unmittelbar vor der durch die letzte von dem überwachten Nutzfahrzeug empfangen Überwachungsinformation repräsentierte Nutzfahrzeugposition liegt oder der durch die letzte von dem überwachten Nutzfahrzeug empfangen Überwachungsinformation repräsentierte Nutzfahrzeugposition entspricht, und eine historische Funksignalinformation, die eine Nutzfahrzeugposition repräsentiert, die auf der Route 112 unmittelbar hinter der durch die letzte von dem überwachten Nutzfahrzeug empfangen Überwachungsinformation repräsentierte Nutzfahrzeugposition liegt. Jede dieser jeweils zumindest zwei historischen Funksignalinformationen können genutzt werden, um aus der Zeitdifferenz zwischen den Empfangszeitpunkten der jeweiligen Funksignalinformationen und der zwischen den durch die jeweiligen Funksignalinformationen liegenden Distanz auf der vorgegebenen Route eine jeweilige Durchschnittsgeschwindigkeit für das jeweilige Nutzfahrzeug zu berechnen. Die erwartete Durchschnittsgeschwindigkeit für den Routenabschnitt kann beispielsweise als Mittelwert der für die Nutzfahrzeuge 101 und 102 berechneten Durchschnittsgeschwindigkeiten bestimmt werden. Es versteht sich, dass die bestimmte aktuelle Nutzfahrzeugposition des überwachten Nutzfahrzeugs 103 von der tatsächlichen aktuellen Nutzfahrzeugposition 114 des überwachten Nutzfahrzeugs 103 abweichen kann.

Für das Bestimmen der zu erwartenden Funksignalqualität werden beispielsweise nur historische Funksignalinformationen der historischen Funksignalinformationen berücksichtigt, die eine jeweilige Nutzfahrzeugposition repräsentieren, die in einem vorgegebenen Bereich um und/oder vorgegebenen Abstand von der bestimmten aktuellen Nutzfahrzeugposition des überwachten Nutzfahrzeugs 103 ist, und die nicht älter als ein vorgegebener Altersschwellwert (z.B. eine Stunde oder einen Tag oder einen Monat oder sechs Monate oder 12 Monate) sind. Zum Beispiel wird der vorgegebene Bereich um und/oder der vorgegebene Abstand von der bestimmten aktuellen Nutzfahrzeugposition des überwachten Nutzfahrzeugs derart gewählt, dass jeweils eine von den Nutzfahrzeugen 101 und 102 stammende historische Funksignalinformation beim Bestimmen der zu erwartenden Funksignalqualität berücksichtigt wird. Die zu erwartende Funksignalqualität wird beispielsweise als Mittelwert der durch diese historischen Funksignalinformationen als Funksignalqualitäten repräsentierten Funksignalparameter (z.B. der durch diese historische Funksignalinformationen repräsentierten Empfangsfeldstärken oder Empfangsfeldstärkeindikatoren oder Signalrauschabständen) bestimmt.

Das Bestimmen in Schritt 304 kann beispielsweise gemäß vorgegebenen Regeln erfolgen. Zum Beispiel können die Regeln vorgeben, dass bestimmt wird, dass die Überfälligkeit der Überwachungsinformation von dem überwachten Nutzfahrzeug ein zu erwartendes Ereignis ist, wenn die zu erwartenden Funksignalqualität des Mobilfunkkommunikationssystems an der bestimmten aktuellen Nutzfahrzeugposition des überwachten Nutzfahrzeugs 103 unter einem vorgegebenen Funksignalqualitätsschwellwert ist. Beispiele für einen solchen Funksignalqualitätsschwellwert sind -95 dBm für die Empfangsfeldstärke als Funksignalparameter oder 0 dB für den Signalrauschabstand oder -20 dB für die Referenzsignalempfangsqualität als Funksignalparameter. Da der Störsender 113 sich beim Passieren der Nutzfahrzeuge 101 und 102 noch nicht an der Nutzfahrzeugposition 114 befand, wird im Folgenden beispielhaft davon ausgegangen, dass der basierend auf den von den Nutzfahrzeugen 101 und 102 stammenden historischen Funksignalinformationen bestimmte erwartete Funksignalqualität an der bestimmten aktuellen Nutzfahrzeugposition des überwachten Nutzfahrzeugs 103 oberhalb des vorgegebenen Funksignalqualitätsschwellwerts liegt.

Falls bestimmt wird, dass die Überfälligkeit der Überwachungsinformation von dem überwachten Nutzfahrzeug 103 ein zu erwartendes Ereignis ist, springt das Flussdiagram in Schritt 305 zurück zu Schritt 301. Andernfalls wird das Flussdiagramm mit dem optionalen Schritt 306 fortgesetzt.

Im Folgenden wird jedoch beispielhaft davon ausgegangen, dass in Schritt 304 nicht bestimmt wird, dass die Überfälligkeit der Überwachungsinformation von dem überwachten Nutzfahrzeug ein zu erwartendes Ereignis ist, so dass das Flussdiagramm mit dem optionalen Schritt 306 fortgesetzt wird.

Im optionalen Schritt 306 wird eine Alarmaktion ausgelöst Zum Beispiel wird im Schritt 306 der/die Disponent/Notrufzentral 110 über den Kommunikationspfad benachrichtigt, dass die Überwachungsinformation von dem überwachten Nutzfahrzeug 103 überfällig ist.

Das Flussdiagramm endet beispielsweise, wenn das überwachte Nutzfahrzeug 103 das Ende der vorgegebene Route 112 erreicht.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausftihrungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen.

Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren ausgeführt durch einen Server (2), wobei das Verfahren umfasst:
- Bereithalten (300) einer Vielzahl von historischen Funksignalinformationen, die von einer Vielzahl von Nutzfahrzeugen (101-103) stammen, wobei jede der historischen Funksignalinformationen von einem jeweiligen der Nutzfahrzeuge an einer jeweiligen Nutzfahrzeugposition erfasst wurde, und wobei jede der historischen Funksignalinformationen die jeweilige Nutzfahrzeugposition und eine durch das jeweilige Nutzfahrzeug an der jeweiligen Nutzfahrzeugposition erfasste jeweilige Funksignalqualität eines Funkkommunikationssystems repräsentiert;
- Überwachen eines Nutzfahrzeugs (103), das sich entlang einer vorgegebenen Route (112) bewegt, durch;
- Empfangen (301) von von dem überwachten Nutzfahrzeug (103) über das Funkkommunikationssystem gesendeten Überwachungsinformationen, wobei jede der Überwachungsinformationen eine jeweilige aktuelle Nutzfahrzeugposition (114) repräsentiert;
- Bestimmen (302), ob eine Überwachungsinformation von dem überwachten Nutzfahrzeug (103) überfällig ist;
- falls bestimmt wird, dass eine Überwachungsinformation von dem überwachten Nutzfahrzeug (103) überfällig ist, Bestimmen (304), zumindest teilweise basierend auf den historischen Funksignalinformationen, ob die Überfälligkeit der Überwachungsinformation von dem überwachten Nutzfahrzeug (103) ein zu erwartendes Ereignis ist.

2. Verfahren nach Anspruch 1, wobei Bestimmen, ob die zeitliche Überfälligkeit ein zu erwartendes Ereignis ist, umfasst:
- Bestimmen einer aktuellen Nutzfahrzeugposition (114) des überwachten Nutzfahrzeugs (103) auf der vorgegebenen Route (112); und
- Bestimmen einer zu erwartenden Funksignalqualität des Funkkommunikationssystems an der bestimmten aktuellen Nutzfahrzeugposition des überwachten Nutzfahrzeugs.

3. Verfahren nach Anspruch 2, wobei für das Bestimmen der aktuellen Nutzfahrzeugposition (114) des überwachten Nutzfahrzeugs (103) auf der vorgegebenen Route zumindest eine zuvor von dem überwachten Nutzfahrzeug (103) empfangene Überwachungsinformation berücksichtigt wird.

4. Verfahren nach einem der Ansprüche 2 und 3, wobei für das Bestimmen der zu erwartenden Funksignalqualität alle historischen Funksignalinformationen der historischen Funksignalinformationen berücksichtigt werden, die eine jeweilige Nutzfahrzeugposition repräsentieren, die in einem vorgegebenen Bereich um und/oder vorgegebenen Abstand von der bestimmten aktuellen Nutzfahrzeugposition des überwachten Nutzfahrzeugposition ist.

5. Verfahren nach einem der Ansprüche 2 bis 4, wobei bestimmt wird, dass die Überfälligkeit der Überwachungsinformation von dem überwachten Nutzfahrzeug (103) ein zu erwartendes Ereignis ist, wenn die zu erwartenden Funksignalqualität des Funkkommunikationssystems an der bestimmten aktuellen Nutzfahrzeugposition (114) des überwachten Nutzfahrzeugs (103) unter einem vorgegebener Funksignalqualitätsschwellwert ist.

6. Verfahren nach einem der Ansprüche 1 bis 5, wobei das Verfahren ferner umfasst:
- Bestimmen der für das überwachte Nutzfahrzeug (103) vorgegebenen Route (112) zumindest teilweise basierend auf den historischen Funksignalinformationen.

7. Verfahren nach Anspruch 6, wobei die für das überwachte Nutzfahrzeug (103) vorgegebenen Route (112) derart bestimmt wird, dass Routenabschnitte mit einer zu erwartenden Funksignalqualität unter einem vorgegebener Funksignalqualitätsschwellwert vermieden und/oder minimiert werden.

8. Verfahren nach einem der Ansprüche 1 bis 7, wobei die historischen Funksignalinformationen und die Überwachungsinformationen Telematikinformationen sind, wobei jeder der Telematikinformationen von einer jeweiligen Telematikeinheit des jeweiligen Nutzfahrzeugs erzeugt wird.

9. Verfahren nach Anspruch 8, wobei jede der Telematikinformationen zumindest eine oder mehrere der folgenden Angaben repräsentiert:
- eine aktuelle Nutzfahrzeugposition;
- eine Funksignalqualität eines Funkkomunikationssystems;
- eine aktuelle Nutzfahrzeuggeschwindigkeit.

10. Verfahren nach einem der Ansprüche 1 bis 8, wobei die empfangenen oder bereitgehaltenen historischen Funksignalinformationen durch eine Funksignalqualitätskarte repräsentiert werden.

11. Verfahren nach Anspruch 9, wobei das Verfahren ferner umfasst:
- Bestimmen der Funksignalqualitätskarte zumindest teilweise basierend auf den historischen Funksignalinformationen.

12. Verfahren nach einem der Ansprüche 1 bis 10, wobei das überwachte Nutzfahrzeug (103) ein Lastkraftwagen, ein Sattelzugfahrzeug oder ein Anhänger, insbesondere ein Sattelauflieger, ist.

13. Servervorrichtung umfassend Mittel (200-203) eingerichtet zur Ausführung des Verfahrens nach einem der Ansprüche 1 bis 12.

14. System umfassend:
- eine Servervorrichtung (2) nach Anspruch 13, und
- ein durch die Servervorrichtung (2) zu überwachendes Nutzfahrzeug (103).

15. Computerprogramm umfassend Programmanweisungen, die dazu ausgebildet sind, bei Ausführung durch mindestens einen Prozessor (200) eines Servers (2), den Server (2) zu veranlassen, das Verfahren nach einem der Ansprüche 1 bis 12 auszuführen.

## Claims

1. Method performed by a server (2), the method comprising:
- holding available (300) a plurality of historical radio signal information that originate from a plurality of utility vehicles (101-103), wherein each of the historical radio signal information was acquired by a respective one of the utility vehicles at a respective utility vehicle position, and wherein each of the historical radio signal information represents the respective utility vehicle position and a respective radio signal quality of a radio communication system acquired by the respective utility vehicle at the respective utility vehicle position;
- monitoring a utility vehicle (103) moving along a predetermined route (112), by:
- receiving (301) monitoring information transmitted by the monitored utility vehicle (103) via the radio communication system, wherein each of the monitoring information represents a respective current utility vehicle position (114);
- determining (302) whether monitoring information from the monitored utility vehicle (103) is overdue;
- if it is determined that a monitoring information from the monitored utility vehicle (103) is overdue, determining (304), based at least in part on the historical radio signal information, whether the overdueness of the monitoring information from the monitored utility vehicle (103) is an event to be expected.

2. Method of claim 1, wherein determining whether the temporal overdueness is an event to be expected comprises:
- determining a current utility vehicle position (114) of the monitored utility vehicle (103) on the predetermined route (112); and
- determining an radio signal quality to be expected of the radio communication system at the specific current utility vehicle position of the monitored utility vehicle.

3. Method according to claim 2, wherein at least one monitoring information previously received from the monitored utility vehicle (103) is taken into account for determining the current utility vehicle position (114) of the monitored utility vehicle (103) on the predetermined route.

4. Method according to any one of claims 2 and 3, wherein for determining the radio signal quality to be expected, all historical radio signal information of the historical radio signal information representing a respective utility vehicle position which is in a predetermined area around and/or predetermined distance from the determined current utility vehicle position of the monitored utility vehicle position is taken into account.

5. Method according to any one of claims 2 to 4, wherein it is determined that the overdueness of the monitoring information from the monitored utility vehicle (103) is an event to be expected if the radio signal quality to be expected of the radio communication system at the determined current utility vehicle position (114) of the monitored utility vehicle (103) is below a predetermined radio signal quality threshold.

6. Method according to any one of claims 1 to 5, wherein the method further comprises:
- determining the predetermined route (112) for the monitored utility vehicle (103) based at least in part on the historical radio signal information.

7. Method according to claim 6, wherein the predetermined route (112) for the monitored utility vehicle (103) is determined in such a way that route sections with an expected radio signal quality below a predetermined radio signal quality threshold are avoided and/or minimized.

8. Method according to any one of claims 1 to 7, wherein the historical radio signal information and the monitoring information are telematics information, wherein each of the telematics information is generated by a respective telematics unit of the respective utility vehicle.

9. Method of claim 8, wherein each of the telematics information represents at least one or more of the following:
- a current utility vehicle position;
- a radio signal quality of a radio communication system;
- a current utility vehicle speed.

10. Method according to any one of claims 1 to 8, wherein the received or held available historical radio signal information is represented by a radio signal quality map.

11. Method of claim 9, wherein the method further comprises:
- determine the radio signal quality map based at least in part on the historical radio signal information.

12. Method according to any one of claims 1 to 10, wherein the monitored utility vehicle (103) is a truck, a tractor unit or a trailer, in particular a semi-trailer.

13. Server apparatus comprising means (200-203) configured to perform the method according to any one of claims 1 to 12.

14. System comprising:
- a server device (2) according to claim 13, and
- a utility vehicle (103) to be monitored by the server device (2).

15. Computer program comprising program instructions which, when executed by at least one processor (200) of a server (2), are configured to cause the server (2) to execute the method according to any one of claims 1 to 12.

## Revendications

1. Méthode exécuté par un serveur (2), la méthode comprenant :
- maintenir à disposition (300) une pluralité d'informations de signaux radio historiques qui proviennent d'une pluralité de véhicules utilitaires (101-103), chacune des informations de signaux radio historiques ont été acquise par un véhicule utilitaire respectif parmi les véhicules utilitaires à une position de véhicule utilitaire respective, et où chacune des informations de signaux radio historiques représentent la position de véhicule utilitaire respective et une qualité de signal radio respective d'un système de communication radio acquise par le véhicule utilitaire respectif à ladite position de véhicule utilitaire respective ;
- surveiller un véhicule utilitaire (103) qui se déplace le long d'un itinéraire prédéterminé (112) :
- recevoir (301) des informations de surveillance envoyées par le véhicule utilitaire surveillé (103) via le système de communication radio, où chacune des informations de surveillance représente une position actuelle respective (114) du véhicule utilitaire ;
- déterminer (302) si une information de surveillance provenant du véhicule utilitaire surveillé (103) est en retard ;
- s'il est déterminé qu'une information de surveillance provenant du véhicule utilitaire surveillé (103) est en retard, déterminer (304), au moins en partie sur la base des informations de signal radio historiques, si le retard de l'information de surveillance provenant du véhicule utilitaire surveillé (103) est un événement attendu.

2. Méthode selon la revendication 1, où déterminer si le retard temporel est un événement attendu comprend :
- déterminer une position actuelle (114) du véhicule utilitaire surveillé (103) sur l'itinéraire prédéterminé (112) ; et
- déterminer une qualité de signal radio attendue du système de communication radio à la position actuelle déterminée du véhicule utilitaire surveillé.

3. Méthode selon la revendication 2, où, pour la détermination de la position actuelle du véhicule utilitaire (114) du véhicule utilitaire (103) surveillé sur l'itinéraire prédéterminé, au moins une information de surveillance reçue auparavant du véhicule utilitaire (103) surveillé est prise en compte.

4. Méthode selon l'une des revendications 2 et 3, où, pour la détermination de la qualité attendue du signal radio, toutes les informations de signal radio historiques des informations de signal radio historiques qui représentent une position de véhicule utilitaire respective qui est dans une zone prédéterminée autour et/ou à une distance prédéterminée de la position actuelle déterminée du véhicule utilitaire de la position de véhicule utilitaire surveillée sont prises en compte.

5. Méthode selon l'une des revendications 2 à 4, où il est déterminé que le retard de l'information de surveillance provenant du véhicule utilitaire (103) surveillé est un événement attendu si la qualité de signal radio attendue du système de communication radio à la position actuelle (114) déterminée du véhicule utilitaire (103) surveillé est inférieure à un seuil de qualité de signal radio prédéterminé.

6. Méthode selon l'une des revendications 1 à 5, où la méthode comprend en outre :
- déterminer l'itinéraire (112) prédéterminé pour le véhicule utilitaire surveillé (103) basé au moins en partie sur les informations de signal radio historiques.

7. Méthode selon la revendication 6, où l'itinéraire (112) prédéterminé pour le véhicule utilitaire (103) surveillé est déterminé de telle sorte que des tronçons d'itinéraire avec une qualité de signal radio attendue inférieure à une valeur seuil de qualité de signal radio prédéfinie sont évités et/ou minimisés.

8. Méthode selon l'une des revendications 1 à 7, où les informations de signal radio historiques et les informations de surveillance sont des informations télématiques, où chacune des informations télématiques est générée par une unité télématique respective du véhicule utilitaire respectif.

9. Méthode selon la revendication 8, où chacune des informations télématiques représente au moins une ou plusieurs des suivantes :
- une position actuelle de véhicule utilitaire ;
- une qualité de signal radio d'un système de communication radio ;
- une vitesse actuelle du véhicule utilitaire.

10. Méthode selon l'une des revendications 1 à 8, où les informations de signal radio historiques reçues ou maintenues à disposition sont représentées par une carte de qualité de signal radio.

11. Méthode selon la revendication 9, la méthode comprenant en outre :
- déterminer la carte de qualité du signal radio basé au moins en partie sur les informations historiques de signal radio.

12. Méthode selon l'une des revendications 1 à 10, où le véhicule utilitaire (103) surveillé est un camion, un véhicule tracteur de semi-remorque ou une remorque, en particulier une semi-remorque.

13. Dispositif serveur comprenant des moyens (200-203) configurés pour mettre en œuvre la méthode selon l'une des revendications 1 à 12.

14. Système comprenant :
- un dispositif serveur (2) selon la revendication 13, et
- un véhicule utilitaire (103) à surveiller par le dispositif serveur (2).

15. Programme informatique comprenant des instructions de programme configurées, lorsqu'elles sont exécutées par au moins un processeur (200) d'un serveur (2), pour amener le serveur (2) à exécuter la méthode selon l'une des revendications 1 à 12.
